# EUROPÄISCHE PATENTSCHRIFT

(11) **EP 1 884 443 B1**
(45) Veröffentlichungstag und Bekanntmachung des Hinweises auf die Patenterteilung: **30.06.2010**
(21) Anmeldenummer: 07013230.3
(22) Anmeldetag: 06.07.2007
(51) Int. Cl.: B62D 1/06, B62D 1/04

(54) **Lenkrad in einem Kraftfahrzeug**
Steering wheel in a motor vehicle
Volant dans un véhicule automobile

(30) Priorität: 02.08.2006 DE 102006036360
(43) Veröffentlichungstag der Anmeldung: 06.02.2008
(73) Patentinhaber: GM Global Technology Operations, Inc., Detroit, MI 48265-3000 (US)
(72) Erfinder: Wilfert, Ralf, 64572 Büttelborn (DE)
(74) Vertreter: Daniel, Ulrich W.P.

(56) Entgegenhaltungen:
- DE-A1- 10 209 206
- DE-A1- 10 216 158
- DE-A1- 19 959 576
- DE-U1-202004 001 832
- US-A1- 2006 033 628

## Beschreibung

Die Erfindung bezieht sich auf ein Lenkrad zum Führen eines Kraftfahrzeugs mit einer Oberfläche.

Kraftfahrzeuge verfügen über ein im Wesentlichen kreisrundes Lenkrad, mit dem entweder direkt über ein Lenkgetriebe oder indirekt über eine Servomechanik die Räder des Kraftfahrzeugs eingeschlagen werden können, um eine Kurve zu durchfahren. Das Lenkrad besteht aus einem Lenkradkranz, der über Speichen mit einem mittigen Lenkradtopf verbunden ist. Der Lenkradtopf nimmt üblicherweise einen Airbag auf und ist mit einem Bedienelement für eine Hupe des Kraftfahrzeugs versehen. Am Lenkrad können auch weitere Bedienelemente, beispielsweise für eine Audioanlage und/oder einen Bordcomputer, vorhanden sein. Das Lenkrad bzw. der Lenkradkranz besteht zumeist aus einem relativ harten Kunststoff, dessen Oberfläche aus optischen und haptischen Gründen veredelt ist. Dies kann entweder durch Ummantelung mit Leder oder mit dem Fachmann bekannten Kunststoffen erfolgen. Die Oberfläche des Lenkrades bzw. des Lenkradkranzes kann auch ergonomisch konturiert sein, um den Händen des Fahrers besonders bei einer Kurvenfahrt ausreichend Halt zu geben, wodurch dieser nicht unbeabsichtigt vom Lenkrad abrutscht und das Kraftfahrzeug aufgrund der selbsttätigen Rückstellkräfte der Lenkung in unerwünschter Weise geradeaus fährt.

Die DE 197 31 285 A1 offenbart ein Bedienelement, insbesondere in Kraftfahrzeugen, mit dem aus mehreren Menüs verschiedene Funktionen ausgewählt werden können. Die Oberfläche des Bedienelements ist dabei entsprechend der ausgewählten Funktion veränderbar, so dass ein Fahrer des Kraftfahrzeugs über seine Fingerspitzen, die das Bedienelement berühren, eine taktil erfassbare Rückmeldung über die ausgewählte Funktion erhält.

Im Weiteren beschreibt die DE 93 07 909 U1 eine berührungsempfindliche Eingabeeinheit, z.B. in Form eines "Touch-Screens", die mit einer zusätzlichen transparenten Folientastatur versehen ist, wodurch der Nutzer durch die notwendige Kraft, die er benötigt, um eine Taste der Folientastatur zu drücken, sicher sein kann, die auf dem Bildschirm abgebildete Funktion auch tatsächlich ausgewählt zu haben.

Darüber hinaus zeigt die DE 41 40 780 A1 eine Eingabevorrichtung mit taktilem Feedback, wobei sich das von einem Nutzer mit einer Fingerspitze betätigte Bedienelement beispielsweise in seiner Position verändert, um die erfolgte Betätigung dieses Bedienelements fühlbar zu machen.

Die bekannten Lenkräder sind insofern nachteilig, als besonders die schweißnassen Hände eines Fahrers vom Lenkrad abrutschen können, was zu einer verkehrsgefährdenden Situation führen kann. Weiterhin können mit den bekannten Bedienelementen am Lenkrad keine Rückmeldungen an den Fahrer übermittelt werden.

Es ist Aufgabe der Erfindung, ein Lenkrad der eingangs genannten Art zu schaffen, mit dem die Verkehrssicherheit und der Bedienkomfort erhöht ist.

Die DE 102 16 158 A1 beschreibt ein Lenkrad, das an zumindest einem Teil seines Lenkradkranzes mindestens eine Formänderungsvorrichtung zur Ausgabe von Informationen aufweist. Die Formänderungsvorrichtung kann beispielsweise einen konzentrisch zum mittleren Umfang des Lenkrades angeordneten Ring mit Vorsprüngen an seinem äußeren oder inneren Umfang oder einen aufblasbaren Schlauch umfassen. Die Vorsprünge des Ringes wirken mit in radialer Richtung bewegbaren Haptik-Kugeln zusammen.

Im Weiteren offenbart die DE 20 2004 001 832 U1 eine Anordnung zur Erzeugung von Vibrationen zur Fahrerinformation, die in einem Lenkrad untergebrachte Piezoelemente umfasst, an die bei Auftreten eines an den Fahrer zu übermittelnden Ereignisses eine elektrische Wechselspannung anlegbar ist, um eine Bewegung des Piezoelementes zu bewirken.

Erfindungsgemäß wird die Aufgabe durch die Merkmale des Anspruchs 1 gelöst.

Ein Lenkrad zum Führen eines Kraftfahrzeugs umfasst eine Oberfläche, die mit im Wesentlichen senkrecht zur Oberfläche anhebbaren oder absenkbaren organischen Aktuatoren in ihrer Struktur veränderbar ist, wobei die auf einem flexiblen Substrat angeordneten Aktuatoren von einer aus organischen Transitoren bestehenden Schaltung angesteuert werden.

Mit einem derart ausgebildeten Lenkrad ist aufgrund einer beispielsweise aufgerauten Oberflächenstruktur die Reibung zwischen den schweißnassen Händen des Fahrers und der Oberfläche des Lenkrads erhöht. Sonach können die Hände nicht mehr unbeabsichtigt vom Lenkrad abrutschen bzw. am Lenkrad verrutschen. Hat der Fahrer hingegen trockene Hände ist die Oberfläche glatt oder eben und bietet ein angenehmes Griffgefühl. In gleicher Weise kann die Oberfläche des Lenkrads beim Einschlagen des Kraftfahrzeugs verändert werden, um bei einer Kurvenfahrt durch die aufgeraute Oberfläche ein Entgleiten des Lenkrades aus den Händen des Fahrers zu vermeiden.

Im Rahmen der Erfindung kann die Oberfläche des Lenkrads in an sich beliebiger Weise verändert werden, bevorzugt jedoch wie im Folgenden beschrieben. Im Normalzustand ist die Oberfläche des Lenkrads im Wesentlichen glatt und eben und kann in gewünschter Weise verändert werden.

Der Vorteil der Erfindung besteht darin, dass mit dem Lenkrad zum einen das Abrutschen der Hände des Fahrers in wirkungsvoller Weise vermieden ist und zum anderen durch eine gewünschte Strukturierung der Oberfläche auch eine Rückmeldung an den Fahrer übermittelt werden kann. Beispielsweise kann bei Überschreiten einer zulässigen Höchstgeschwindigkeit, die mit einem GPS-System für den jeweiligen Streckenabschnitt ermittelt werden kann, die Struktur der Oberfläche des Lenkrads verändert werden, um den Fahrer auf diesen Umstand hinzuweisen.

In vorteilhafter Ausgestaltung wird die Oberfläche eines Lenkradkranzes zumindest abschnittsweise in ihrer Struktur verändert, insbesondere in dem Bereich, der üblicherweise mit den Händen vom Fahrer ergriffen wird. Dies sind die seitlichen Bereiche des Lenkrads. Dabei ist es dem Fachmann möglich, diese beiden seitlichen Abschnitte des Lenkradkranzes mit Einrichtungen zu versehen, um die Oberfläche in gewünschter Weise zu strukturieren.

Zur Strukturierung der Oberfläche sind dieser Aktuatoren zugeordnet, um die Oberfläche aus Kunststoff und/oder Leder im Wesentlichen senkrecht zur Oberfläche in Form von beispielsweise als Noppen gestalteten Erhebungen anzuheben und/oder in Form von beispielsweise napfförmigen Vertiefungen abzusenken. Derartige Aktuatoren können u.a. Piezokristalle und/oder Solenoidspulen umfassen, die dem Fachmann bekannt sind. Die entsprechende Ansteuerung der Aktuatoren erfolgt über ein Steuergerät, das auch in ein zentrales Steuergerät des Kraftfahrzeugs integriert sein kann. Mit diesen Aktuatoren, die auch in miniaturisierter Bauweise realisierbar sind, kann die Oberfläche in gewünschter Weise strukturiert werden, beispielsweise können noppenartige Erhebungen oder Vertiefungen oder Pfeile zur Anzeige einer Richtung auf der Oberfläche erzeugt werden.

Um möglichst kleine Aktuatoren zu erhalten, können hierfür organische Materialien verwendet werden. Mit derartigen Aktuatoren, wie sie von einem Braille-Display zur Erzeugung von Blindenschrift bekannt sind, die wiederum von einer Schaltung, bestehend aus organischen Transistoren, angesteuert werden, ist es möglich, die organischen Aktuatoren auf einem flexiblen Substrat anzuordnen, das in praktisch beliebiger Weise geformt werden kann, so dass das Substrat um den Lenkradkranz des Lenkrads gelegt werden kann. Dabei verfügt dieses Substrat lediglich über eine Dicke von ca. 1mm und erlaubt eine Anhebung oder Absenkung der Oberfläche um ca. 0,5mm. Die organischen Aktuatoren können so nahe beieinander angeordnet werden, dass der Oberfläche, beispielsweise einer Kunststofffolie bzw. einem darüber liegenden Lederüberzug, beliebige Strukturen verliehen werden können.

Zur Erhöhung des Bedienkomforts sind dem Lenkrad Sensoren zugeordnet, mit denen verschiedene physiologische Parameter erfasst werden können. Dies sind unter anderem die Hauttemperatur, die Hautfeuchtigkeit, die über den Hautwiderstand erfasst wird, sowie der Druck, mit dem die Hand das Lenkrad bzw. den Lenkradkranz ergreift. Entsprechende Sensoren sind aus der Medizintechnik bekannt und können in das Lenkrad integriert werden, vorzugsweise in dem Bereich, der üblicherweise mit den Händen ergriffen wird. Stellt der Hautfeuchtigkeitssensor fest, dass der Fahrer feuchte Hände hat, so kann die Rauhigkeit der Oberfläche erhöht werden, um das Abrutschen der Hände zu vermeiden.

Mit der Strukturierung der Oberfläche können Informationen an den Fahrer übermittelt werden, ohne dass dieser seinen Blick vom umgebenden Verkehrsgeschehen abwenden muss. Die Richtungsinformationen eines Navigationssystems können beispielsweise anhand von fühlbaren Pfeilen an der Oberfläche des Lenkrads an den Fahrer übermittelt werden. Soll der Fahrer nach links abbiegen, kann im Bereich der rechten Hand in der Oberfläche des Lenkrads ein Pfeil nach oben gebildet werden. Auch eine aktivierte Blinkleuchte kann derart angezeigt werden. Soll die eingelegte Gangstufe zur Einhaltung einer wirtschaftlichen Fahrweise verändert werden, können wellenförmige Bewegungen durch die Oberfläche an beiden Abschnitten des Lenkrads, die von den Händen ergriffen werden, entweder nach oben oder nach unten laufen, je nachdem ob hinauf- oder hinuntergeschaltet werden soll. Ebenso kann die momentane Fahrweise angezeigt werden, z.B. für langsame Fahrt eine glatte, unstrukturierte Oberfläche, bei schneller Fahrt werden kleine Noppen in der Oberfläche erzeugt, um auch die Reibung zu erhöhen, und bei rasanter oder sportlicher Fahrt vergrößern sich die Noppen.

Weiterhin kann die Strukturierung der Oberfläche des Lenkrads auch personalisiert werden. Wird von dem Kraftfahrzeug mit einem beliebigen System die Identität des Fahrers festgestellt bzw. dem Kraftfahrzeug von diesem vorgegeben, so kann die Oberfläche des Lenkrads in der vom Fahrer gewünschten Weise strukturiert werden, also entweder glatt oder mit einer von ihm gewünschten Strukturierung.

Prinzipiell kann eine solche Strukturierung der Oberfläche auch an den Handgriffen eines Lenkers, beispielsweise eines Motorrads, erfolgen.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels mit Bezugnahme auf die Zeichnungen näher erläutert. Es zeigt:

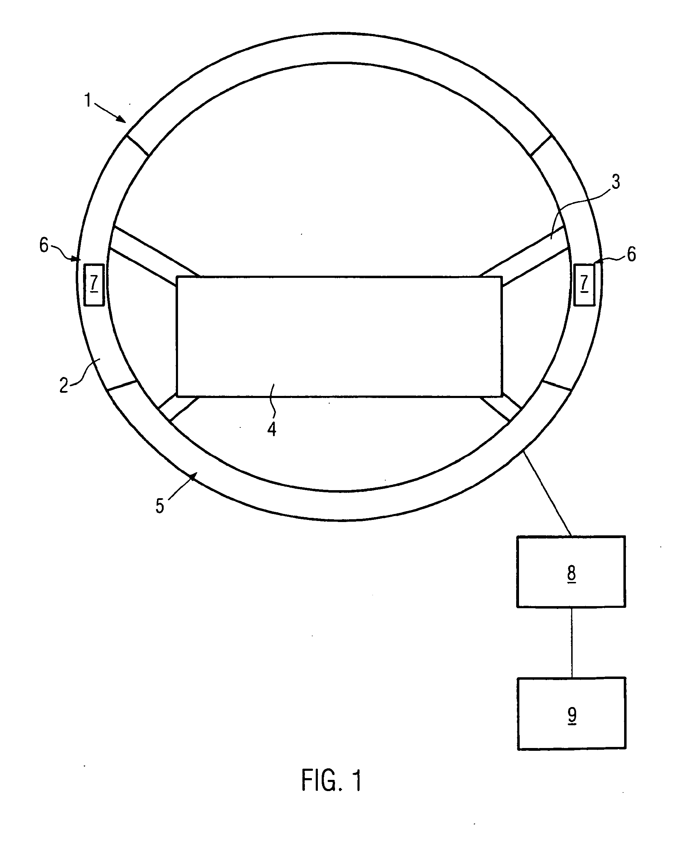

- Fig. 1: ein Blockschaltbild zur Ansteuerung der Strukturierung der Oberfläche eines erfindungsgemäßen Lenkrades und
- Fig. 2 bis Fig. 5: verschiedene Oberflächenstrukturen des Lenkrads nach Fig. 1.

Das Lenkrad 1 eines Kraftfahrzeugs umfasst einen Lenkradkranz 2, der über Speichen 3 mit einem mittigen Lenkradtopf 4 verbunden ist. Diese Teile bestehen üblicherweise aus einem Hartkunststoff. Die Oberfläche 5 des Lenkrads 1 ist entweder mit Leder ummantelt oder verfügt über eine haptisch angenehme Kunststoffoberfläche. Zur Verbesserung der Reibung zwischen einer Hand des Fahrers des Kraftfahrzeugs und der Oberfläche 5 des Lenkrads 1 sind zwei Abschnitte 6 am Lenkradkranz 2 derart ausgebildet, dass ihre Oberflächen 5 in gewünschter Weise strukturiert werden können. Hierzu sind unter der Oberfläche 5 in den Abschnitten 6 organische Aktuatoren auf einem Substrat angeordnet, das eine Dicke von ca. 1 mm aufweist. Mit diesen Aktuatoren kann die Oberfläche 5 ca. um 0,5 mm angehoben und/oder abgesenkt werden.

Zusätzlich sind den Abschnitten 6 verschiedene Sensoren 7 zugeordnet, um unter anderem die Temperatur, die Feuchtigkeit der Haut über den Hautwiderstand sowie den ausgeübten Druck der Hand auf das Lenkrad 1 zu erfassen. Die Sensorsignale werden an ein Steuergerät 8 übermittelt, das auch Fahrzeugdaten, wie die momentane Geschwindigkeit oder einen Lenkradeinschlagswinkel, über einen Datenbus 9 empfängt. Aus diesen Daten kann vom Steuergerät 8 unter anderem ermittelt werden, ob die Oberfläche 5 aufgeraut werden muss, um die Reibung zwischen dem Lenkrad 1 und der Hand des Fahrers zu erhöhen. Ebenso können über den Datenbus 9 Informationen eines Navigationssystems an das Steuergerät 8 übermittelt werden, um Lenkhinweise in Form von Pfeilen auf der Oberfläche 5 der Abschnitte 6 zu erzeugen.

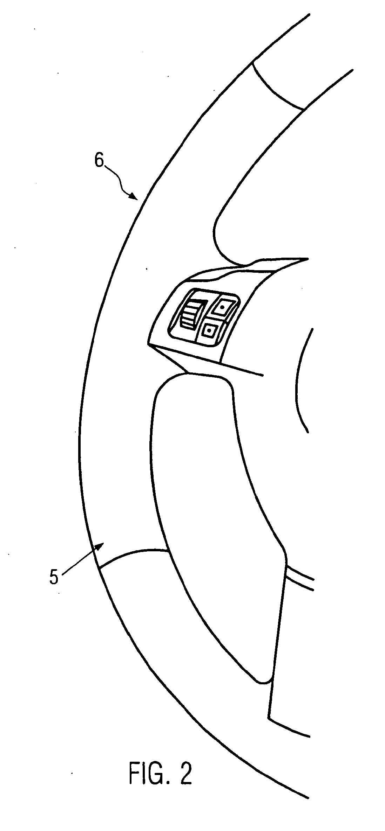

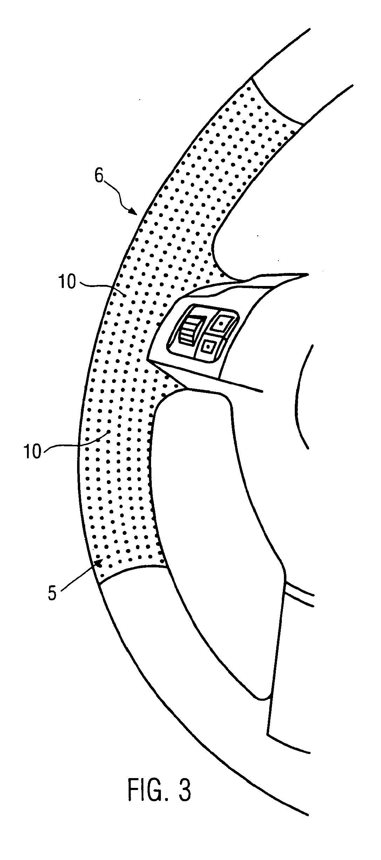

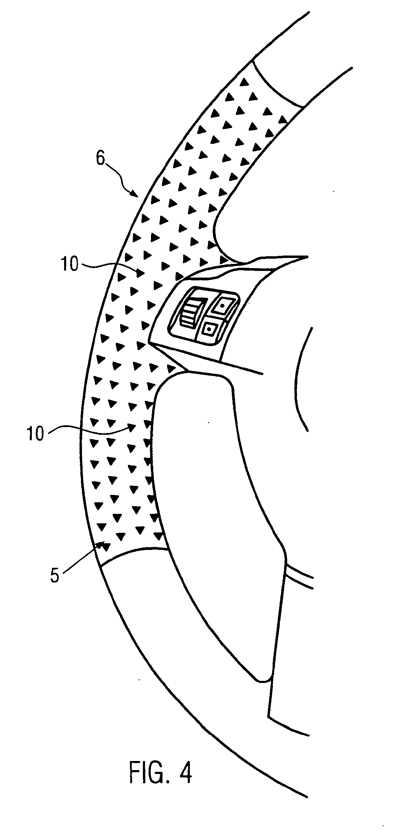

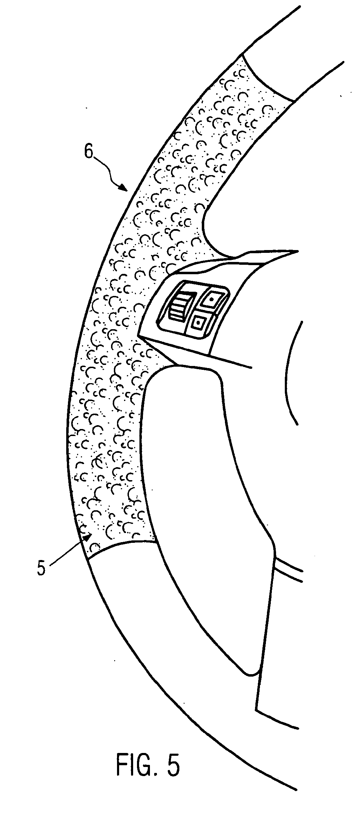

In den Fig. 2 bis 5 sind verschiedene Oberflächen 5 des linken Abschnitts 6 des Lenkrads 1 abgebildet. In Fig 2 ist die Oberfläche 5 glatt und bietet somit ein angenehmes haptisches Empfinden. Nach Fig. 3 sind an der Oberfläche 5 eine Vielzahl kleiner Noppen 10 ausgebildet, um z.B. auf eine schnelle Fahrweise hinzudeuten. Gemäß Fig. 4 sind diese Noppen 10 wesentlich größer ausgebildet, um auf eine möglicherweise zu schnelle Fahrweise aufmerksam zu machen. Schließlich ist in Fig. 5 eine aufgeraute Oberfläche 5 dargestellt, mit der die Reibung zwischen der Hand des Fahrers und dem Lenkrad 1 erhöht werden kann, um ein Abrutschen von schweißnassen Händen zu vermeiden.

### Bezugszeichenliste

- 1.: Lenkrad
- 2.: Lenkradkranz
- 3.: Speiche
- 4.: Lenkradtopf
- 5.: Oberfläche von 1
- 6.: Abschnitt
- 7.: Sensor
- 8.: Steuergerät
- 9.: Datenbus
- 10.: Noppe

## Patentansprüche

1. Lenkrad zum Führen eines Kraftfahrzeugs mit einer Oberfläche (5), die mit im Wesentlichen senkrecht zur Oberfläche (5) anhebbaren oder absenkbaren organischen Aktuatoren in ihrer Struktur veränderbar ist, wobei die auf einem flexiblen Substrat angeordneten Aktuatoren von einer aus organischen Transitoren bestehenden Schaltung angesteuert werden.

2. Lenkrad nach Anspruch 1, **dadurch gekennzeichnet, dass** die Oberfläche (5) eines Lenkradkranzes (2) zumindest in einem Abschnitt (6) in ihrer Struktur veränderbar ist.

3. Lenkrad nach Anspruch 1 oder 2, **dadurch gekennzeichnet, dass** dem Lenkrad (1) Sensoren (7) zugeordnet sind.

4. Lenkrad nach einem der Ansprüche 1 bis 3, **dadurch gekennzeichnet, dass** mittels der veränderbaren Struktur der Oberfläche (5) des Lenkrads (1) Informationen wiedergebbar sind.

5. Lenkrad nach einem der Ansprüche 1 bis 4, **dadurch gekennzeichnet, dass** die Veränderung der Struktur der Oberfläche (5) des Lenkrads (1) personalisierbar ist, also in der von einem Fahrer gewünschten Weise erfolgt.

## Claims

1. A steering wheel for steering a motor vehicle, comprising a surface (5) which is changeable in its structure by means of organic actuators which can be lifted or lowered substantially perpendicular to the surface (5), with the actuators which are arranged on a flexible substrate being triggered by a circuit consisting of organic transistors.

2. A steering wheel according to claim 1, **characterized in that** the surface (5) of a steering wheel rim (2) is changeable in its structure at least in one section (6).

3. A steering wheel according to claim 1 or 2, **characterized in that** the steering wheel (1) is associated with sensors (7).

4. A steering wheel according to one of the claims 1 to 3, **characterized in that** information can be reproduced by means of the changeable structure of the surface (5) of the steering wheel (1).

5. A steering wheel according to one of the claims 1 to 4, **characterized in that** the change in the structure of the surface (5) of the steering wheel (1) can be personalized, thus occurring in a manner as desired by the driver.

## Revendications

1. Volant de direction pour la conduite d'un véhicule à moteur avec une surface (5) dont la structure peut être modifiée à l'aide d'actionneurs organiques pouvant être soulevés ou abaissés de façon sensiblement perpendiculaire de la surface (5), les actionneurs disposés sur un substrat flexible étant commandés par un circuit composé de transistors organiques.

2. Volant de direction selon la revendication 1, **caractérisé en ce que** la surface (5) d'une jante de volant (2) peut être modifiée au niveau de sa structure au moins dans une partie (6).

3. Volant de direction selon la revendication 1 ou 2, **caractérisé en ce que** le volant de direction (1) est associé à des capteurs (7).

4. Volant de direction selon l'une des revendications 1 à 3, **caractérisé en ce que** des informations peuvent être reproduites au moyen de la structure modifiable de la surface (5) du volant de direction (1).

5. Volant de direction selon l'une des revendications 1 à 4, **caractérisé en ce que** la modification de la structure de la surface (5) du volant (1) est personnalisable et a donc lieu de la manière souhaitée par le conducteur.
